# EUROPÄISCHE PATENTSCHRIFT

(11) **EP 2 619 463 B1**
(45) Veröffentlichungstag und Bekanntmachung des Hinweises auf die Patenterteilung: **19.11.2014**
(21) Anmeldenummer: 11757348.5
(22) Anmeldetag: 19.09.2011
(51) Int. Cl.: F16B 7/04

(54) **SCHIEBERPLATTE FÜR EINEN EXZENTERVERSCHLUSS**
SLIDE PLATE FOR A CAM-TYPE CLOSURE
PLAQUE COULISSANTE POUR FERMETURE À EXCENTRIQUE

(30) Priorität: 23.09.2010 EP 10178912
(43) Veröffentlichungstag der Anmeldung: 31.07.2013
(73) Patentinhaber: Syma Intercontinental AG, 9533 Kirchberg (CH)
(72) Erfinder: ZÜLLIG, Kurt, CH-9533 Kirchberg (CH); STRÄSSLE, Marcel, CH-9533 Kirchberg (CH)
(74) Vertreter: Liebetanz, Michael
(86) Internationale Anmeldenummer: PCT/EP2011/066222
(87) Internationale Veröffentlichungsnummer: WO 2012/038376

(56) Entgegenhaltungen:
- EP-A2- 0 506 607
- WO-A1-97/20148

## Beschreibung

### TECHNISCHES GEBIET

Die vorliegende Erfindung betrifft eine Schieberplatte für einen Exzenterverschluss einer Klemmvorrichtung zum lösbaren Verbinden zweier Profilstücke gemäss dem Oberbegriff des Anspruchs 1.

### STAND DER TECHNIK

Eine solche Schieberplatte ist aus der WO 97/20148 A1 der Anmelderin bekannt. Sie ist Teil einer dort beschriebenen Klemmvorrichtung zum lösbaren Verbinden zweier Profilstücke. Ein Einsatzkern der Klemmvorrichtung verfügt über einen axialbeweglichen Schieber mit einem Endteil, um ein Klemmelement zu verschieben, welches mindestens teilweise in eine Öffnung eines der beiden Profilstücke einfügbar ist. Der Schieber verfügt über eine innere Öffnung für die Aufnahme einer Exzenterwalze, mit welcher die axiale Verschiebung durchgeführt wird.

Diese Klemmvorrichtung arbeitet sehr zufriedenstellend und weist keine Funktionsprobleme auf. Sie erfordert jedoch eine genaue Fertigung der Exzenterwalze und deren Lagerung, sowie der Schieberplatte und deren Öffnung zur Aufnahme der Exzenterwalze, da die Drehung der Exzenterwalze in der Öffnung die Platte betätigt und damit das Klemmelement verschiebt. Dabei ist es wesentlich, eine ausreichende Klemmkraft aufzubringen und dass der Punkt der maximalen Verschiebung nicht vollständig erreicht oder überschritten wird.

### DARSTELLUNG DER ERFINDUNG

Ausgehend von diesem Stand der Technik liegt der Erfindung die Aufgabe zugrunde, eine Schieberplatte für ein Klemmelement der oben genannten Art anzugeben, welches eine einfachere Klemmung gestattet und gegenüber Fertigungstoleranzen unempfindlicher ist.

Dieser Aufgabe wird erfindungsgemäss mit einer Schieberplatte mit den Merkmalen des Anspruchs 1 gelöst, indem eine Schieberplatte für einen Exzenterverschluss einer Klemmvorrichtung zum lösbaren Verbinden zweier Profilstücke vorgeschlagen wird, der einen Kopplungsbereich für die Kopplung mit Verriegelungselementen der Klemmvorrichtung aufweist. Dabei verfügt die Schieberplatte über eine innere Öffnung für die Aufnahme einer Exzenterwalze der Klemmvorrichtung, mit welcher die axiale Verschiebung der Schieberplatte durchführbar ist. Dabei ist zwischen der inneren Öffnung für die Aufnahme einer Exzenterwalze und dem Kopplungsbereich ein Federbereich vorgesehen. Durch die federnde Betätigung der Exzenterwalze wird für den Benutzer ein sich bei der Betätigung steigender Widerstand verspürbar, so dass neben dem Verschwenken der Klinken des Verschlusselementes auch eine haptische Rückmeldung vorhanden ist. Gleichzeitig weist ein mit einer solchen Schieberplatte versehenes Verschlusselement eine grössere Toleranz für die aneinanderzusetzenden Profilstücke auf und kann nicht überdreht werden oder sich unbeabsichtigt lösen.

Indem der Federbereich aus einer einstückig ausgeführten Ausformung aus der Fläche der Schieberplatte besteht, ist das Teil leicht herstellbar und über lange Zyklen hinweg funktionssicher.

Vorteilhafterweise sind zwei seitliche Federbereiche vorgesehen, die in einem dem Kopplungsbereich gegenüberliegenden Endbereich der Schieberplatte enden. Damit ist es möglich, zwischen den beiden seitlichen Federbereichen eine mit dem Endbereich verbundene Gegenzunge vorzusehen, die die innere Öffnung aufweist, so dass eine Beaufschlagung der Ränder der inneren Öffnung mit der Spannkraft über den Exzenter gut geführt ist. Dadurch ist es auch möglich, diese Öffnung weiterhin in der Nähe der Lasche des Kopplungsbereiches vorzusehen, so dass durch die Gegenzunge ein langer Federweg erreicht werden kann.

Weitere Ausführungsformen sind in den abhängigen Ansprüchen angegeben.

Ein wesentlicher Vorteil der Schieberplatte gemäss der Erfindung für eine Klemmvorrichtung ist, dass die einzelnen Komponenten, also insbesondere auch die Profilstücke, in denen die Klemmvorrichtungen verwendet werden, ein grösseres Spiel aufweisen können, also mit grösseren Toleranzen gefertigt werden können, ohne an Betriebssicherheit zu verlieren.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: zeigt eine teilweise geschnittene Seitenansicht einer Klemmvorrichtung mit einer Schieberplatte gemäss einem Ausführungsbeispiel der Erfindung;
- Fig. 2: zeigt die Schieberplatte aus Fig. 1 in einer perspektivischen Ansicht,
- Fig. 3: zeigt die Schieberplatte aus Fig. 1 in einer Seitenansicht;
- Fig. 4: zeigt eine Draufsicht auf die Schieberplatte nach Fig. 2, und
- Fig. 5: eine Explosionsansicht der Klemmvorrichtung nach Fig. 1.

### BESCHREIBUNG BEVORZUGTER AUSFÜHRUNGSFORMEN

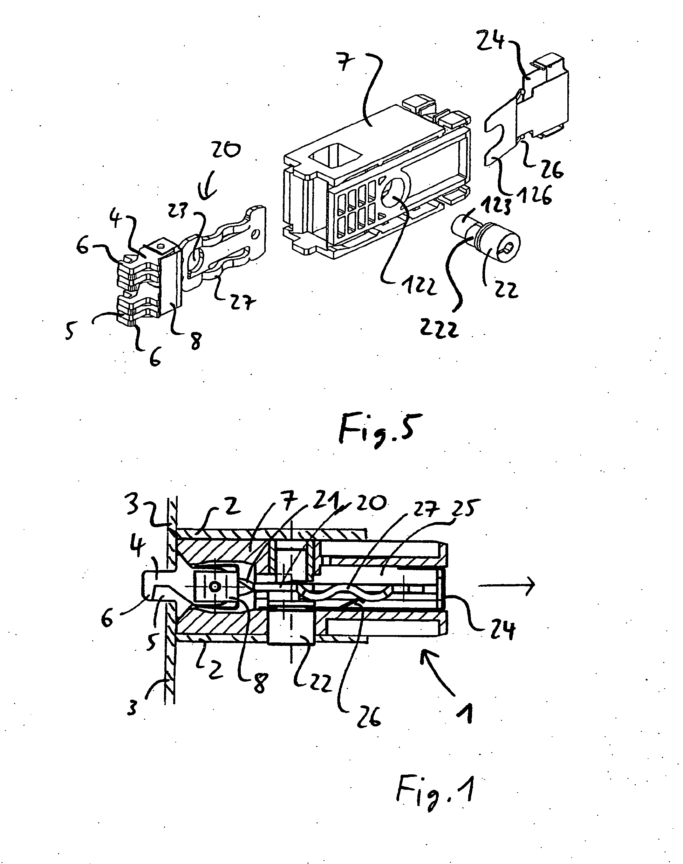

Die Fig. 1 zeigt eine teilweise geschnittene Querschnittsansicht einer Klemmvorrichtung 1 zum lösbaren Verbinden zweier Profilstücke, von denen das eine Profilstück 2 als einen Einsatz umgebendes Profil und das zweite Profilstück 3 als quer dazu verlaufende Frontfläche 3 mit einer Öffnung oder zumeist einer senkrecht zur Zeichenebene verlaufende Nut zu sehen ist. Das erste Profilstück 2 wird für die Verbindung an das zweite Profilstück 3 herangeführt, welches die besagte Öffnung aufweist, um die Klinken 4, 5 der Klemmvorrichtung 1 mit ihren Nasen 6 aufzunehmen, die dann durch Verspreizen der Klinken 4, 5 die beiden Profilstücke miteinander verbindet. Die Klinken und Nasen können dabei wie in der EP 0 506 607 A2 der Anmelderin ausgestaltet sein, vorzugsweise sind sie alternierend mit den Nasen 6 in den beiden Richtungen gestapelt, um gleichmässig beiderseits die besagte Öffnung im zweiten Profilstück hintergreifen zu können.

Die Klemmvorrichtung 1 verfügt weiter über einen Einsatzkern 7, in dem in einer bekannten Art und Weise die Klinken 4 und 5 über einen Klinkenbolzen 8 befestigt sind.

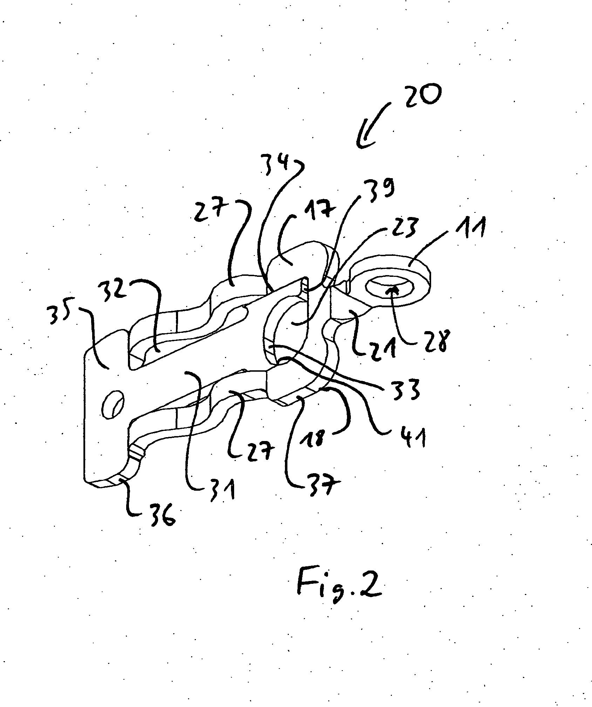

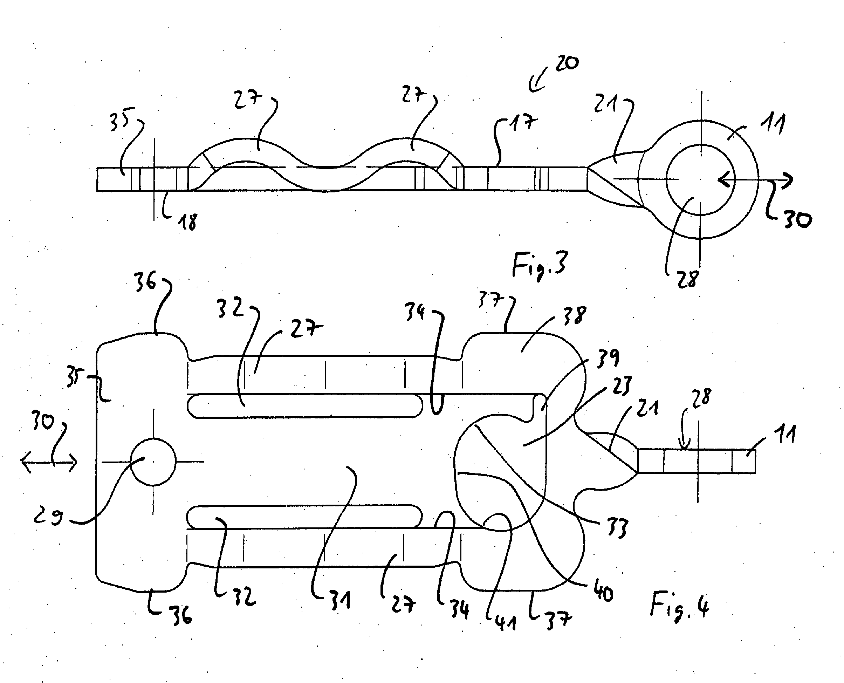

Der Klinkenbolzen 8 steht mit einer gelochten Lasche 11 in Verbindung, welche besser in den Fig. 2 und 3 sichtbar ist.

Die Schieberplatte selber ist in der Fig. 1 mit dem Bezugszeichen 20 versehen und der um 90 Grad gedrehte Übergangsbereich 21 zum Klinkenbolzen 8 hin ist in dem Raum hinter diesem Bolzen 8 erkennbar.

Mit dem Bezugszeichen 22 ist die Exzenterwalze bezeichnet, die in die in der Fig. 3 dargestellte Ausnehmung 23 eingreift und diese durchdringt. Die Exzenterwalze 22 wird dabei vom Einsatzkern 7 seitlich geführt, sodass durch eine Drehung der Exzenterwalze 22 die in den Einsatzkern 7 angeordnete Schieberplatte 20 in ihrer longitudinalen Richtung verschoben werden kann. Die Verschiebung der Schieberplatte 20 in dieser durch den Pfeil 130 angedeuteten Längsrichtung führt zu einer Verschwenkbewegung der Klinken 4 und 5, wobei durch den Klinkenbolzen 8 die damit vermittelte translatorische Bewegung in eine Aufspreizung bzw. Schliessung der Klinken 4, 5 in Bezug auf die Nasen 6 stattfindet.

Die Schieberplatte 20 ist im Einsatzkern 7 geführt, wobei die translatorische Bewegung in Richtung 130 durch die Drehung des Exzenters 8 ausgelöst wird.

Eine Feder 24 ist im dargestellten Ausführungsbeispiel eine im Wesentlichen U-förmige Metallplatte, die von der den Klinken 4 und 5 gegenüberliegenden Seite in einen entsprechenden Aufnahmeraum 25 des Klemmelementes 1 eingeführt wird. Sie verfügt über zwei vorteilhafterweise ausgestanzte seitliche Federzungen 26, die sich gegen entsprechende Anschlagflächen an der Führung abstützen. Durch die weitergehende Federzunge 126, die mit einer Ausnehmung um den Fuss des Exzenterbolzens 22 herumgelegt ist, kann dieser zum Einschieben in das Profilstück 2 eingedrückt werden.

Die Fig. 2 zeigt eine perspektivische Ansicht der Schieberplatte 20. Die Fig. 3 zeigt die Schieberplatte 20 dann in einer Seitenansicht. Mit dem Pfeil 30 ist die translatorische Bewegung der Schieberplatte 20 und insbesondere der Kupplungslasche 11 angedeutet. Die Drehung der Kupplungslasche 11 mit der Durchbohrung 28 zur Aufnahme des Klinkenbolzens 8 um 90 Grad in dem Übergangsbereich 21 ist aus dem Stand der Technik bekannt und eine bevorzugte Ausführungsform, um dass Klemmelement 1 flach auszugestalten, sodass es in dünne Profile einsetzbar ist, die an ein meistens längliches tragendes Profilstück angesetzt werden. In anderen Ausgestaltungen kann die Verbindungslasche 11 auch in der gleichen Ebene wie die Schieberplatte 20 liegen. Es ist auch nicht notwendig, dass eine entsprechende Ausnehmung für einen Klinkenbolzen 8 vorgesehen ist. Wesentlich ist, dass eine Kupplungseinrichtung 11, 28 vorgesehen ist, mit der die Klinken 4 und 5 ansteuerbar sind, vermittelt über die Bewegung der Schieberplatte 20 in Richtung des Doppelpfeils 30, beim Spannen in Richtung des Pfeils 130.

Die Schieberplatte des Standes der Technik aus der o.g. WO 97/20148 A1 ist aus Vollmaterial gefertigt, mit der Ausnehmung 23 zur Aufnahme des Klinkenbolzens 22.

Die Schieberplatte 20 gemäss der vorliegenden Erfindung ist ebenfalls einteilig ausgestaltet, weist jedoch verschiedene, vorteilhafterweise durch Stanzungen erzeugte Teilbereiche auf. So ist eine Gegenzunge 31 vom Vollmaterial der Schieberplatte 20 herausgelöst. Dabei sind bei einer vorteilhaften aber nicht zwingend notwendigen Ausgestaltung seitliche Durchbrüche 32 gegenüber den Doppel S-förmigen Bereichen 27 ausgestanzt. In Richtung auf die Lasche 11 ist die Ausnehmung 23 zur Aufnahme des Exzenterbolzens 22 ausgestanzt. Zwischen der Gegenzunge 31 und den Randwänden 33 der Ausnehmung 23 sind an den beiden gegenüberliegenden Seiten der Gegenzunge die Kanten 34 lediglich von dem Material der Schieberplatte 20 unterbrochen, sind aber vorzugsweise in Kontakt, um bei einer gespannten Schieberplatte 20 mit Kräften aufgrund der Drehung des Exzenterbolzens 22 in der Ausnehmung 23 diese Kräfte in seitlicher Richtung auf die Schieberplatte 20 insgesamt übertragen zu können.

Die Gegenzunge 31 endet auf der der Lasche 11 gegenüberliegenden Seite in einem Endbereich 35 mit vorteilhafterweise breiterer Ausführung. Die Seitenflächen 36 dieses Endbereichs 35 zusammen mit den Endflächen 37 des vorderen Plattenbereichs 38 können in dem Einsatzkern 7 seitlich und gegebenenfalls auch auf ihren Oberflächen, der Oberseite 17 und der Unterseite 18, geführt sein. Mit anderen Worten, in dem Einsatzkern 7 besteht ein Hohlraum zur Aufnahme der Schieberplatte 20, welcher eine seitliche Ausdehnung in der Grösse des Abstandes der Seitenkanten 36 und 37 voneinander aufweist.

In dem Endbereich 35 ist in dem dargestellten Ausführungsbeispiel als Option ein Aufhängeloch 29 vorgesehen, um die Schieberplatte nach einem Veredelungsschritt, zum Beispiel einem Härten oder Anlassen, aufgehängt werden kann.

Wie schon oben angedeutet, bestehen auf den beiden Seiten zur Gegenzunge 31 jeweils Doppel S-förmige Federbereiche 27. Diese Doppel S-Form bedeutet, dass Material in Herstellungsprozess durch Formen aus der Hauptebene der Schieberplatte 20 herausgeführt wird. Vorzugsweise sind die beiden Doppel S-Formen in gleicher Richtung in Bezug auf die Hauptebene der Schieberplatte 20 ausgeformt. Sie können aber auch gegenläufig herausgedrückt sein.

Bei der Herstellung der ursprünglich einstückig ausgestanzten Federplatte wird beim Erstellen der seitlichen Bereiche 32 und der Ausnehmung 23 bei Trennung der Gegenzunge 31 an den Flächen 34 darauf geachtet, dass an der zu dem Endbereich 38 zur Lasche hinweisenden Seite neben der die Exzenterwalze 22 aufnehmenden Öffnung 23 auch eine Stanzöffnung 39 vorgesehen ist. Diese im ursprünglichen Stanzschritt zuerst ausgeführte Öffnung 39 ist dann in der Längsdimension noch grösser und verkürzt sich durch die Ausformung der Doppel S-Federelemente 27, da diese dazu führen, dass sich die Gegenzunge 31 in Bezug auf die Lasche 11 auf diese zubewegt.

Die Ausnehmung 23 verfügt über eine mit einem vorbestimmten Radius versehene Krümmung 33, über einen flachen Bereich 40 und eine gegenüber liegende Krümmung mit demselben vorbestimmten Radius, bei der der Punkt 41 als Übergangsbereich bezeichnet ist. Hier ist zu beachten, dass dort der Radius von einem Teil der Gegenzunge 31 zu einem Teil am Bereich 38 übergeht. Die Exzenterwalze 22 hat einen Durchmesser von übergehend. Die Form der Exzenterwalze 22 ist in Fig. 5 gut zu erkennen.

Die verbesserte Funktionsweise dieser Schieberplatte 20 gegenüber dem Stand der Technik ergibt sich daraus, dass bei einem Einsetzen und Drehen der Exzenterwalze 22 sich diese an der Wand 40 abstützt und, insbesondere eine Feder 26 besteht, die die Schieberplatte 20 in Bezug auf den Pfeil 30 in Richtung des Endbereichs 35 wegdrückt. Die Lasche 11 ist jedoch in dem Klinkenbolzen 8 translatorisch fest mit dem Einsatzkern 7 verbunden, so dass sich durch die nur übertragene translatorische Bewegung die Klinken 4 und 5 zurückbewegen und die Nasen 6 sich gegenüber dem zweiten nicht dargestellten Profil spreizen. Beim Erreichen der maximalen Spreizung, die natürlich auch von der Tiefe der Ausführung der hinterschnittenen Öffnung im zweiten Profilstück abhängt, bewirkt eine weitere Drehung des Exzenterbolzens 22 in der Öffnung 23 beim Stand der Technik keine weitere translatorische Bewegung sondern ein Verklemmen der Schieberplatte gegenüber der im Einsatzkern 8 befindlichen Exzenterwalze 22.

Bei der vorliegenden Erfindung führt eine weitere Drehung der Exzenterwalze 22 dazu, dass die Gegenzunge 31 weiter in Richtung des Endbereichs 35 weggedrückt wird. Dies ist möglich, da die beiden seitlichen Federbereiche 27 mit ihrer Doppel S-Ausführung einen gewissen inhärent vorgegebenen Federweg aufweisen und durch die auftretenden Kräfte gestreckt werden können. Mit anderen Worten; die Gegenzunge 31 bewegt sich gegenüber den vorderen Bereich 38 der Schieberplatte, erkennbar insbesondere an den Trennflächen 34 translatorisch.

Daraus ist zu ersehen, dass zwar die gewählte Doppel S-Form der Elemente (Federbereiche) 27 einen vorteilhaften Federweg gewährleistet, aber es könnte auch eine einfache S-Form oder eine andere einen im Vollmaterial ausgestalten Federweg gestattete Ausgestaltung geben. Das "S" könnte auch selbst durch die Hauptebene der Schieberplatte 20 hinaus vorgesehen sei und sich selbst auf beiden Seiten dieser Hauptebene erstrecken.

Insbesondere kann durch den durch die seitlichen Elemente (Federbereiche) 27 erstellten Federweg sicher gestellt werden, dass der Benutzer bei einem solchen mit der Schieberplatte 20 ausgestalteten Klemmelement 1 einen zunehmenden Widerstand verspürt, welcher beim ersten Anziehen vor der Aufspreizung der Nasen 6 der Klinken 4, 5 beginnt und das Anziehen und Verriegeln des Klemmelementes 1 zur Verbindung der beiden Profilstücke haptisch fühlbar macht. Darüber hinaus ist durch die ansteigende Kraftbeaufschlagung der Schieberplatte 20 durch den Exzenterbolzen 22 gewährleistet, dass dieser beim Verspannen an Ort und Stelle bleibt und nicht in eine Ausgangslage zurückrutscht.

Vorteilhafterweise ist die Schieberplatte aus Federstahl.

Die Fig. 5 zeigt eine Explosionsansicht der Klemmvorrichtung nach Fig. 1, wobei nur die wesentlichen gegenüber den Fig. 1 bis 4 besser sichtbaren Elemente beschrieben und bezeichnet sind. Die Exzenterwalze 22 wird mit dem Exzenterwiderlager 123 durch und in die Exzenteraufnahme 122 in dem Einsatzkern 7 eingeschoben, wobei durch ein Abstützen des Exzenters 222 auf dem um die U-förmige Öffnung der Federzunge 126 der Feder 24 bestehenden Federbereich dieser eindrückbar und lösbar ist. Wesentlich ist, dass der Exzenter 222 durch die Öffnung 23 in der Schieberplatte 20 eingeschoben ist und sich in dieser drehen kann.

**BEZUGSZEICHENLISTE**

| | | | |
|---|---|---|---|
| 1 | Klemmelement | 28 | Klinkenbolzenöffnung |
| 2 | erstes Profil | 29 | Aufhängeloch |
| 3 | zweites Profil | 30 | Doppelpfeil |
| 4 | Klinke | 31 | Gegenzunge |
| 5 | Klinke | 32 | Ausstanzung |
| 6 | Nase | 33 | Innenkante |
| 7 | Einsatzkern | 34 | Seitenkanten |
| 8 | Klinkenbolzen | 35 | Endbereich |
| 11 | Lasche | 36 | Seitenkante |
| 17 | Oberseite | 37 | Seitenkante |
| 18 | Unterseite | 38 | Vorderbereich |
| 20 | Schieberplatte | 39 | Stanzöffnung |
| 21 | Übergangsbereich | 40 | Kantenfläche |
| 22 | Exzenterwalze | 41 | Übergangsbereich |
| 23 | Ausnehmung | 122 | Exzenterwalzenaufnahme |
| 24 | Feder | 123 | Exzenterwiderlager |
| 25 | Öffnung | 126 | Federzungenabschnitt |
| 26 | Federzunge | 130 | Spannrichtung |
| 27 | Doppel S-Federbereich | 222 | Exzenter |

## Patentansprüche

1. Schieberplatte (20) für einen Exzenterverschluss einer Klemmvorrichtung (1) zum lösbaren Verbinden zweier Profilstücke (2), mit einem Kopplungsbereich (11, 28) für die Kopplung mit Verriegelungselementen (4, 5, 6) der Klemmvorrichtung (1), wobei die Schieberplatte (20) über eine innere Öffnung (23) für die Aufnahme einer Exzenterwalze (22) der Klemmvorrichtung (1) verfügt, mit welcher die axiale Verschiebung (30, 130) der Schieberplatte (20) durchführbar ist, **dadurch gekennzeichnet, dass** zwischen der inneren Öffnung (23) für die Aufnahme einer Exzenterwalze (22) und dem Kopplungsbereich (11, 28) ein Federbereich (27) vorgesehen ist.

2. Schieberplatte (20) nach Anspruch 1, **dadurch gekennzeichnet, dass** der Federbereich (27) aus einer einstückig ausgeführten Ausformung aus der Fläche der Schieberplatte (20) besteht.

3. Schieberplatte (20) nach Anspruch 2, **dadurch gekennzeichnet, dass** zwei seitliche Federbereiche (27) vorgesehen sind, die in einem dem Kopplungsbereich (11, 28) gegenüberliegenden Endbereich (35) der Schieberplatte (20) enden, und dass zwischen den beiden seitlichen Federbereichen (27) eine mit dem Endbereich (35) verbundene Gegenzunge (31) vorgesehen ist, an die die innere Öffnung (23) angrenzt.

4. Schieberplatte (20) nach Anspruch 3, **dadurch gekennzeichnet, dass** das freie Ende der Gegenzunge (31) seitlich (34) an den vorderen Bereich (38) der Schieberplatte (20) grenzt, der zwischen Kopplungsbereich (11, 28) und den zwei seitlichen Federbereichen (27) vorgesehen ist.

5. Schieberplatte (20) nach einem der Ansprüche 1 bis 4, **dadurch gekennzeichnet, dass** die innere Öffnung (23) über eine gegenüber den Federbereiche (27) im Wesentlichen quer verlaufende Eingriffskante (40) für die Exzenterwalze (22) verfügt.

6. Schieberplatte (20) nach einem der Ansprüche 1 bis 5, **dadurch gekennzeichnet, dass** sie seitliche Führungskanten (36, 37) in Richtung der axialen Verschiebung (30, 130) aufweist.

7. Schieberplatte (20) nach einem der Ansprüche 1 bis 5, **dadurch gekennzeichnet, dass** die Federbereiche (27) im Verschnitt der Schieberplatte (20) eine einfache oder doppelte S-Form aufweisen, wobei die Federbereiche (27) aus der Ebene der Schieberplatte (20) nach einer (17) und/oder nach beiden (17,18) Seiten herausragen.

## Claims

1. A slide plate (20) for an eccentric closure of a clamping device (1) for releasably connecting two profiled pieces (2), with a coupling region (11, 28) for coupling with locking elements (4, 5, 6) of the clamping device (1), wherein the slide plate (20) has an inner opening (23) for receiving an eccentric roll (22) of the clamping device (1), which can be used for the axial displacement (30, 130) of the slide plate (20), **characterized in that** a spring region (27) is provided between the inner opening (23) for receiving an eccentric roll (22) and the coupling region (11, 28).

2. The slide plate (20) according to claim 1, **characterized in that** the spring region (27) consists of a formation of the surface of the slide plate (20) realized in a single-piece.

3. The slide plate (20) according to claim 2, **characterized in that** two lateral spring regions (27) are provided, which terminate in an end region (35) of the slide plate (20) lying opposite of the coupling region (11, 28), and that a counter-tongue (31) joined with the end region (35) is provided between the two lateral spring regions (27), to which the inner opening (23) adjoins.

4. The slide plate (20) according to claim 3, **characterized in that** the free end of the counter-tongue (31) laterally (34) abuts the front region (38) of the slide plate (20), which is provided between the coupling region (11, 28) and the two lateral spring regions (27).

5. The slide plate (20) according to one of claims 1 to 4, **characterized in that** the inner opening (23) has an engaging edge (40) for the eccentric roll (22) that essentially runs transverse relative to the spring regions (27).

6. The slide plate (20) according to one of claims 1 to 5, **characterized in that** it exhibits lateral guide edges (36, 37) in the direction of the axial displacement (30, 130)

7. The slide plate (20) according to one of the claims 1 to 5, **characterized in that** the spring regions (27) exhibit a single or double S-shape in the cross section of the slide plate (20), wherein the spring regions (27) extend out of the plane of the slide plate (20), toward one (17) and/or both (17, 18) sides.

## Revendications

1. Plaque coulissante (20) pour une fermeture excentrique d'un dispositif de serrage (1) pour connecter de manière détachable deux pièces profilées (2), avec une région de couplage (11,28) pour le couplage avec des éléments de verrouillage (4,5,6) du dispositif de serrage (1), où la plaque coulissante (20) dispose d'une ouverture intérieure (23) pour l'accueil d'un cylindre excentrique (22) du dispositif de serrage (1), avec laquelle la déplacement axial (30, 130) de la plaque coulissante (20) est exécutable, **caractérisé en ce que** une région de ressort (27) est prévue entre l'ouverture intérieure (23) pour l'accueil d'un cylindre excentrique (22) et la région de couplage (11,28).

2. Plaque coulissante (20) selon la revendication 1, **caractérisée en ce que** la région de ressort (27) est constituée par une formation en une pièce à partir de la surface de la plaque coulissante (20).

3. Plaque coulissante (20) selon la revendication 2, **caractérisée en ce que** deux régions de ressort latérales (27) sont prévues, lesquelles terminent dans une région d'extrémité (35) de la plaque coulissante (20) opposée à la région de couplage (11,28), et **en ce que** une languette correspondante (31) connectée à la région d'extrémité (35) est prévue entre les deux régions de ressort latérales (27), à laquelle l'ouverture intérieure (23) est adjacente.

4. Plaque coulissante (20) selon la revendication 3, **caractérisée en ce que** l'extrémité libre de la languette correspondante (31) est latéralement (34) adjacente à la région avant (38) de la plaque coulissante (20), laquelle est prévue entre la région de couplage (11,28) et les deux régions de ressort latérales (27).

5. Plaque coulissante (20) selon l'une des revendications 1 à 4, **caractérisée en ce que** l'ouverture intérieure (23) possède un bord de prise (40) pour le cylindre excentrique (22) s'étendant essentiellement de manière transversale face aux régions de ressort (27).

6. Plaque coulissante (20) selon l'une de la revendication 1 à 5, **caractérisée en ce qu'**elle comporte des bords de guidage (36, 37) en direction du déplacement axial (30, 130).

7. Plaque coulissante (20) selon l'une des revendications 1 à 5, **caractérisé en ce que** les régions de ressort (27) présentent une forme simple ou double de « S » en coupe transversale de la plaque coulissante (20), où les régions de ressort (27) s'étendent hors du plan de la plaque coulissante (20) d'un (17) et/ou des deux côtés (17,18).
